(19) Europäisches Patentamt
European Patent Office
Office européen des brevets

(11) **EP 2 995 193 A1**

(12) **EUROPEAN PATENT APPLICATION**
published in accordance with Art. 153(4) EPC

(43) Date of publication:
**16.03.2016 Bulletin 2016/11**

(21) Application number: **14795473.9**

(22) Date of filing: **11.04.2014**

(51) Int Cl.:
**A01G 1/00** (2006.01)

(86) International application number:
**PCT/JP2014/060508**

(87) International publication number:
**WO 2014/181635 (13.11.2014 Gazette 2014/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **09.05.2013 JP 2013099366**

(71) Applicant: **Toyo Tire & Rubber Co., Ltd.**
**Osaka-shi, Osaka 550-8661 (JP)**

(72) Inventor: **ISHIZAKA Nobuyoshi**
**Osaka-shi**
**Osaka 550-8661 (JP)**

(74) Representative: **Hart-Davis, Jason et al**
**Cabinet Beau de Loménie**
**158, rue de l'Université**
**75340 Paris Cedex 07 (FR)**

(54) **ARTIFICIAL SOIL PARTICLES, AND PROCESS FOR PRODUCING ARTIFICIAL SOIL PARTICLES**

(57) Attention is paid to a relationship between the structure and characteristics of an artificial soil particle, which has so far been little studied, and a novel artificial soil particle having great potential to achieve various advantages, and a technique of producing such an artificial soil particle, are provided. An artificial soil particle (10) includes a plurality of fillers (1) having a small hole (2). The fillers bond with each other through a binder (5). The artificial soil particle (10) has a self-organized structure formed by competition between the fillers (1) and the binder (5). The self-organized structure is a three-dimensional network structure in which the fillers (1) bond with each other in a three-dimensional or a lamella structure in which the fillers (1) are aligned in a predetermined direction.

[Figure 2]

(a)

(b)

**Description**

TECHNICAL FIELD

The present invention relates to an artificial soil particle including a plurality of fillers having a small hole that are bound together using a binder, and a method for producing such an artificial soil particle.

BACKGROUND ART

There have in recent years been an increasing number of plant factories, which allow for growing of plants, such as vegetables, etc., in an environment under controlled growth conditions. In most conventional plant factories, leaf vegetables, such as lettuce, etc., are hydroponically grown. More recently, there has been a move toward attempts to grow root vegetables, which are not suitable for hydroponic cultivation, in a plant factory. In order to grow root vegetables in a plant factory, it is necessary to develop an artificial soil that has good basic soil functions and high quality, and is easy to handle.

Here, the basic functions and quality of soil significantly depend on the structure of soil particles included in the soil. This holds true for artificial soils. For example, characteristics such as water retentivity, fertilizer retentivity, etc. of an artificial soil vary depending on the porous structure of artificial soil particles included in the artificial soil. In other words, there is a close relationship between the structure and characteristics of an artificial soil particle. Therefore, if the structure of an artificial soil particle can be flexibly controlled, various artificial soils having different characteristics can be developed.

However, for artificial soils so far developed, the control of the structure of artificial soil particles has been little studied, and the relationship between the structure and characteristics of an artificial soil particle has not been sufficiently clarified. Among artificial soils so far developed is an aggregate-structure zeolite that is an aggregate of zeolite powder particles bonded together using a binder including a water-soluble polymer, such as, for example, that described in Patent Document 1. In such an aggregate-structure zeolite, porosity is imparted to the particles by moisture attached to the zeolite surface being vaporized due to heat during drying. Patent Document 1 describes an artificial soil having a particle structure that is determined, depending on the rate of vaporization of moisture. It is not easy to precisely control such an artificial soil particle structure.

CITATION LIST

PATENT LITERATURE

Patent Document 1: Japanese Unexamined Patent Application Publication No. 2000-336356

SUMMARY OF INVENTION

TECHNICAL PROBLEM

When an artificial soil is developed, it is, for example, desirable to impart, to the artificial soil, the control function capable of appropriately supplying water or nutrients to a plant to be grown while achieving the ability to grow plants that is similar to that of natural soil. In other words, artificial soils are required to have well-balanced basic soil functions. Therefore, in the future development of artificial soils, an attempt is expected to be made to clarify the relationship between the structure and characteristics of an artificial soil particle, and based on such a finding, control the structure of the artificial soil particle.

With the above problems in mind, the present invention has been made. It is an object of the present invention to pay attention to the relationship between the structure and characteristics of an artificial soil particle, which has so far been little studied, and provide a novel artificial soil particle having great potential to achieve various advantages, and a technique of producing such an artificial soil particle.

SOLUTION TO PROBLEM

To achieve the above object, an artificial soil particle according to the present invention is an artificial soil particle including a plurality of fillers having a small hole, the fillers bonding with each other through a binder, in which the artificial soil particle has a self-organized structure formed by competition between the fillers and the binder.

During the course of formation of an artificial soil particle, fillers that are a main material for the artificial soil particle normally fall into a disordered state over time according to the law of entropy increase. On the other hand, in the case of the artificial soil particle having this configuration, fillers compete against a binder during granulation of the fillers through the binder, and therefore, a self-organized structure having a certain order is formed in the particle. This self-organized structure is a certain specific structure, which has an influence on characteristics of the artificial soil particle. In addition, the self-organized structure of the artificial soil particle can be controlled based on a condition under which the fillers are granulated.

Therefore, the artificial soil particle having this configuration can be used to provide a novel artificial soil that is different from conventional artificial soils even in terms of concept, and can be expected to provide an artificial soil having a high added value and great potential to achieve various advantages.

In the artificial soil particle of the present invention, the self-organized structure is preferably a three-dimensional network structure in which the plurality of fillers bond with each other in a three-dimensional fashion.

In the artificial soil particle thus configured, the three-dimensional network structure formed as the self-organized structure has a three-dimensional framework having a high strength, which can contribute to stabilization of the structure of the artificial soil particle. In addition, an interstice formed in the three-dimensional framework of the three-dimensional network structure can hold various substances, and therefore, an artificial soil that makes the most of characteristics of the held substance can be provided.

In the artificial soil particle of the present invention, the self-organized structure is preferably a lamella structure in which the plurality of fillers are aligned in a predetermined direction.

In the artificial soil particle thus configured, the lamella structure formed as the self-organized structure has anisotropy in a specific direction, and therefore, an artificial soil that has significant characteristics under a specific condition can be provided.

In the artificial soil particle of the present invention, a communication hole is preferably formed between the fillers.

In the artificial soil particle thus configured, the communication hole formed between the fillers can be caused to have a function different from that of the small hole of the filler, and therefore, a multi-functional artificial soil can be provided.

In the artificial soil particle of the present invention, the small hole preferably has a size ranging from the subnanometer to the submicrometer scale, and the communication hole preferably has a size ranging from the submicrometer to the submillimeter scale.

In the artificial soil particle thus configured, the small hole of the filler has a size ranging from the subnanometer to the submicrometer scale, and therefore, can effectively capture nutrients required for improving the quality of a plant. In addition, the communication hole has a size ranging from the submicrometer to the submillimeter scale, and therefore, can effectively absorb moisture essential for growth of a plant. Thus, the small hole and the communication hole have different sizes, and therefore, a multi-functional artificial soil that has well-balanced basic soil functions can be provided.

In the artificial soil particle of the present invention, the small hole preferably has ion exchange capability.

In the artificial soil particle thus configured, the ion exchange capability allows the small hole to hold fertilizer components, and therefore, an artificial soil that can maintain fertilizer retentivity over a long time can be provided.

The artificial soil particle of the present invention preferably has an average particle size of 0.2 to 10 mm.

The artificial soil particle thus configured has an average particle size of 0.2 to 10 mm, and therefore, an easy-to-handle artificial soil that is particularly suitable for cultivation of root vegetables can be provided.

An artificial soil particle production method according to the present invention is a method for producing an artificial soil particle including a plurality of fillers having a small hole, the fillers bonding with each other through a binder, the method including causing the fillers to perform self-organization by competition between the fillers and the binder.

The artificial soil particle production method thus configured provides good advantages similar to those of the above artificial soil particle. Specifically, in the artificial soil particle production method having this configuration, fillers compete against a binder during granulation of the fillers through the binder, and therefore, a self-organized structure having a certain order is formed in the particle. This self-organized structure is a certain specific structure, which has an influence on characteristics of the artificial soil particle. In addition, the self-organized structure of the artificial soil particle can be controlled based on a condition under which the fillers are granulated.

Therefore, the artificial soil particle produced by the artificial soil particle production method having this configuration can be used to provide a novel artificial soil that is different from conventional artificial soils even in terms of concept, and can be expected to provide an artificial soil having a high added value and great potential to achieve various advantages.

BRIEF DESCRIPTION OF DRAWINGS

[FIG. 1] FIG. 1 is a diagram schematically showing an artificial soil particle according to the present invention.
[FIG. 2] FIG. 2 is a schematic diagram showing an example self-organized structure formed in an artificial soil particle due to competition between fillers and an alginate as a binder.

[FIG. 3] FIG. 3 is a model diagram schematically showing a positional relationship between small holes and a communication hole in an artificial soil particle.

[FIG. 4] FIG. 4 is a schematic diagram of an artificial soil aggregate.

DESCRIPTION OF EMBODIMENTS

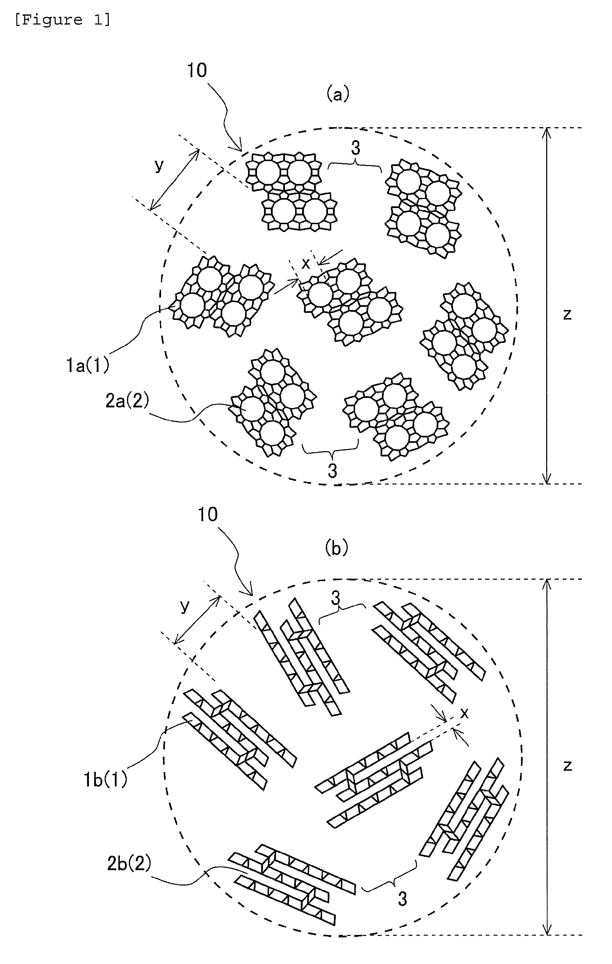

Embodiments of an artificial soil particle according to the present invention and a method for producing such an artificial soil particle will now be described with reference to FIGS. 1-4. Note that the method for producing the artificial soil particle will be mentioned in the description of the artificial soil particle. The present invention is not intended to be limited to configurations described and shown in the embodiments below and the drawings.

<Configuration of Artificial Soil Particle>

FIG. 1 is a diagram schematically showing an artificial soil particle 10 according to the present invention. FIG. 1(a) illustrates an artificial soil particle 10 that employs zeolite 1a, which is a natural porous mineral, as a filler 1. FIG. 1(b) illustrates an artificial soil particle 10 that employs hydrotalcite 1b, which is a natural layered mineral, as a filler 1. Note that symbols x, y, and z shown in FIG. 1 represent sizes of a small hole 2 described below, a communication hole 3 described below, and the artificial soil particle 10, respectively. The sizes x, y and z are not to scale in the drawings.

The artificial soil particle 10 is formed of a plurality of the fillers 1 that bond with each other through a binder. In FIG. 1, the binder is not shown for ease of understanding of the structure of the filler 1. In the artificial soil particle 10, the fillers 1 do not necessarily need to be in contact with each other. The fillers 1 may maintain a relative positional relationship within a predetermined range in a single particle with a binder being interposed between each filler. The filler 1 of the artificial soil particle 10 has a large number of small holes 2 extending from the surface to the inside. The small hole 2 is in various forms. For example, when the filler 1 is the zeolite 1a of FIG. 1(a), a void 2a that exists in the crystal structure of the zeolite 1a is the small hole 2. When the filler 1 is the hydrotalcite 1b of FIG. 1(b), an interlayer space 2b that exists in the layered structure of the hydrotalcite 1b is the small hole 2. In other words, the term "small hole" as used herein means a void, interlayer space, space, etc., that exist in the structure of the filler 1, and are not limited to "hole-like" forms.

The size of the small hole 2 of the filler 1 (the average value of the size x of the void 2a or the interlayer space 2b in FIG. 1) ranges from the subnanometer to the submicrometer scale. For example, when the filler 1 is the zeolite 1a of FIG. 1(a), the size (diameter) of the void 2a in the crystal structure of the zeolite 1a is about 0.3 to 1.3 nm. When the filler 1 is the hydrotalcite 1b of FIG. 1(b), the size (distance) of the interlayer space 2b in the layered structure of the hydrotalcite 1b is about 0.3 to 3.0 nm. Alternatively, the filler 1 may be formed of an organic porous material described below. In this case, the size x of the small hole 2 is about 0.1 to 0.8 $\mu$m. The size of the small hole 2 of the filler 1 is measured using an optimum technique that is selected from gas adsorption, mercury intrusion, small-angle X-ray scattering, image processing, etc., and a combination thereof, depending on the state of an object to be measured.

The small hole 2 of the filler 1 is preferably formed of a material having ion exchange capability so that the artificial soil particle 10 has sufficient fertilizer retentivity. As the material having ion exchange capability, a material having cation exchange capability, a material having anion exchange capability, or a mixture thereof may be employed. Alternatively, a porous material (e.g., a polymeric foam material, glass foam material, etc.) that does not have ion exchange capability may be separately prepared, the above material having ion exchange capability may be introduced into the small holes of the porous material by injection, impregnation, etc., and the resultant material may be used as the filler 1. Examples of the material having cation exchange capability include cation exchange minerals, humus, and cation exchange resins. Examples of the material having anion exchange capability include anion exchange minerals and anion exchange resins.

Examples of the cation exchange minerals include smectite minerals such as montmorillonite, bentonite, beidellite, hectorite, saponite, stevensite, etc., mica minerals, vermiculite, zeolite, etc. Examples of the cation exchange resins include weakly acidic cation exchange resins and strongly acidic cation exchange resins. Of them, zeolite or bentonite is preferable. The cation exchange minerals and the cation exchange resins may be used in combination. The cation exchange capacity of the cation exchange mineral and cation exchange resin is set to 10 to 700 meq/100 g, preferably 20 to 700 meq/100 g, and more preferably 30 to 700 meq/100 g. When the cation exchange capacity is less than 10 meq/100 g, sufficient nutrients cannot be taken in, and nutrients taken in are likely to flow out quickly due to watering, etc. On the other hand, even when the cation exchange capacity is greater than 700 meq/100 g, the fertilizer retentivity is not significantly improved, which is not cost-effective.

Examples of the anion exchange minerals include natural layered double hydroxides having a double hydroxide as a main framework such as hydrotalcite, manasseite, pyroaurite, sjogrenite, patina, etc., synthetic hydrotalcite and hydrotalcite-like substances, and clay minerals such as allophane, imogolite, kaolinite, etc. Examples of the anion exchange resins include weakly basic anion exchange resins and strongly basic anion exchange resins. Of them, hydrotalcite is preferable. The anion exchange minerals and the anion exchange resins may be used in combination. The anion exchange capacity of the anion exchange mineral and anion exchange resin is set to 5 to 500 meq/100 g, preferably 20 to 500 meq/100 g, and more preferably 30 to 500 meq/100 g. When the anion exchange capacity is less than 5 meq/100 g, sufficient nutrients cannot be taken in, and nutrients taken in are likely to flow out quickly due to watering, etc. On the other hand, even when the anion exchange capacity is greater than 500 meq/100 g, the fertilizer retentivity is not significantly improved, which is not cost-effective.

<Techniques of Granulating Fillers>

The artificial soil particle 10 is formed by causing a plurality of the fillers 1 to be clustered together in the form of a grain. To granulate the fillers 1, for example, a polymeric gelling agent is used as a binder. The polymeric gelling agent causes the fillers 1 to bond with each other by means of a gelling reaction. Examples of the gelling reaction of a polymeric gelling agent include a gelling reaction between an alginate and a multivalent metal ion, a gelling reaction of carboxymethyl cellulose (CMC), and a gelling reaction caused by a double helix structure forming reaction of a polysaccharide such as carrageenan, etc. Of them, a gelling reaction between an alginate and a multivalent metal ion is suitable as a means for forming a "self-organized structure" described below that is a feature of the present invention. Sodium alginate, which is an alginate, is a neutral salt formed by the carboxyl group of alginic acid bonding with a Na ion. While alginic acid is insoluble in water, sodium alginate is water-soluble. When an aqueous solution of sodium alginate is added to an aqueous solution containing a multivalent metal ion (e.g., a Ca ion), sodium alginate molecules are ionically cross-linked together to form a gel. The gelling reaction may, for example, be performed by the following steps. Initially, an alginate is dissolved in water to formulate an aqueous solution of the alginate, and the fillers 1 are added to the aqueous alginate solution, followed by thorough stirring, to form a mixture solution that is the aqueous alginate solution in which the fillers 1 are dispersed. Next, the mixture solution is dropped into an aqueous solution of a multivalent metal ion, thereby gelling the alginate contained in the mixture solution into grains.

Here, the gelling reaction between an alginate and a multivalent metal ion will be discussed. During the course of the gelling reaction, an ionic cross-link between alginate molecules interacts with and competes against the dispersion force of the fillers 1 in an aqueous alginate solution, leading to organization. Although the fillers 1 normally fall into a disordered state (i.e., a random state) over time according to the law of entropy, the artificial soil particle 10 of this embodiment is formed while the fillers 1 compete against an alginate as a binder, and therefore, a self-organized structure having a certain order is formed in the particle. This self-organized structure is a certain specific structure, which has an influence on characteristics of the artificial soil particle 10 as a final product.

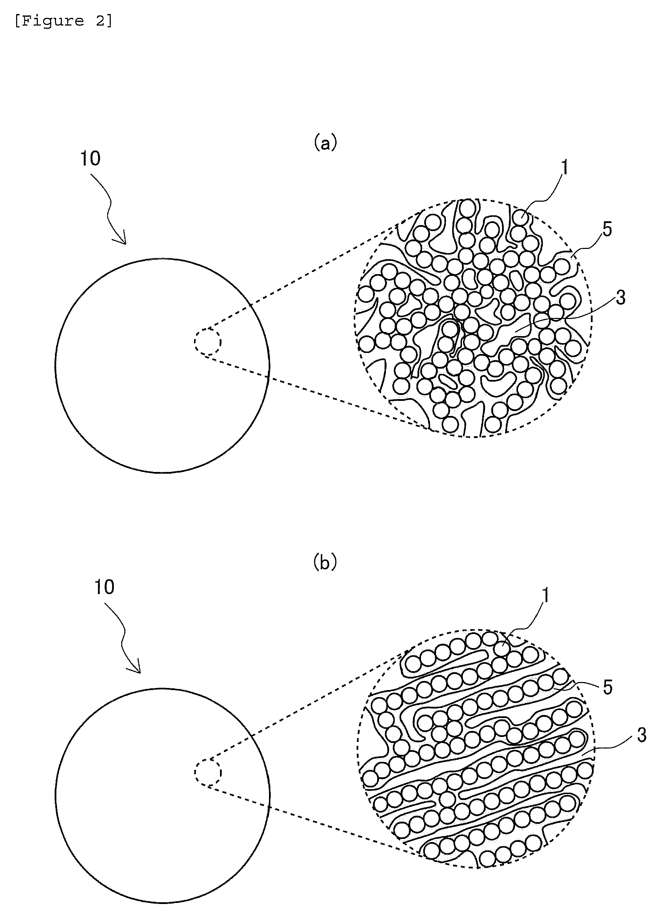

FIG. 2 is a schematic diagram showing an example self-organized structure formed in the artificial soil particle 10 due to competition between the fillers 1 and an alginate as a binder 5. An enlarged view of a portion of the artificial soil particle 10 is shown in a dashed-line circle. FIG. 2(a) shows a three-dimensional network structure formed by causing a plurality of the fillers 1 to bond with each other in a three-dimensional fashion through the binder 5 due to self-organization. The three-dimensional network structure can stabilize the structure of the artificial soil particle 10 because the three-dimensional framework of the fillers 1 bonding with each other has a high strength. Also, an interstice 3 (corresponding to the communication hole 3 of FIG. 1) in the three-dimensional framework of the three-dimensional network structure can hold various substances, and therefore, an artificial soil that makes the most of characteristics of the held substance can be provided. FIG. 2(b) shows a lamella structure that is formed by a plurality of the fillers 1 being arranged in a predetermined direction through the binder 5 due to self-organization. The lamella structure has anisotropy in a specific direction, and therefore, an artificial soil that has significant characteristics under a specific condition can be provided. Also, an interstice 3 (corresponding to the communication hole 3 of FIG. 1) in the lamella structure can hold various substances.

Examples of an alginate that can be used as the binder 5 in the gelling reaction include sodium alginate, potassium alginate, and ammonium alginate. These alginates may be used in combination. The concentration of the aqueous alginate solution is 0.1 to 5% by weight, preferably 0.2 to 5% by weight, and more preferably 0.2 to 3% by weight. When the concentration of the aqueous alginate solution is less than 0.1% by weight, the gelling reaction is less likely to occur. When the concentration of the aqueous alginate solution exceeds 5% by weight, the viscosity of the aqueous alginate solution is excessively high, and therefore, it is difficult to stir the mixture solution containing the fillers 1 added, or drop the mixture solution to the aqueous multivalent metal ion solution.

The aqueous multivalent metal ion solution to which the aqueous alginate solution is dropped may be any aqueous solution of a divalent or higher-valent metal ion that reacts with the alginate to form a gel. Examples of such an aqueous multivalent metal ion solution include an aqueous solution of a multivalent metal chloride such as calcium chloride, barium chloride, strontium chloride, nickel chloride, aluminum chloride, iron chloride, cobalt chloride, etc., an aqueous solution of a multivalent metal nitrate such as calcium nitrate, barium nitrate, aluminum nitrate, iron nitrate, copper nitrate, cobalt nitrate, etc., an aqueous solution of a multivalent metal lactate such as calcium lactate, barium lactate, aluminum lactate, zinc lactate, etc., and an aqueous solution of a multivalent metal sulfate such as aluminum sulfate, zinc sulfate, cobalt sulfate, etc. These aqueous multivalent metal ion solutions may be used in combination. The concentration of the aqueous multivalent metal ion solution is 1 to 20% by weight, preferably 2 to 15% by weight, and more preferably 3 to 10% by weight. When the concentration of the aqueous multivalent metal ion solution is less than 1% by weight, the gelling reaction is less likely to occur. When the concentration of the aqueous multivalent metal ion solution exceeds 20% by weight, it takes a long time to dissolve the metal salt, and an excessive amount of the material is required, which is not cost-effective.

<Control of Self-Organized Structure>

The self-organized structure of the artificial soil particle 10 that emerges from competition between the fillers 1 and an alginate as the binder 5, may be controlled based on a condition under which the fillers 1 are granulated (gelled). Examples of the condition for controlling the self-organized structure of the artificial soil particle 10 will now be described.

To form the three-dimensional network structure of FIG. 2(a), an aqueous sodium alginate solution that is a dispersion of the fillers 1 is dropped into an aqueous calcium chloride solution while the concentrations of the aqueous sodium alginate solution and aqueous calcium chloride solution and the amount of the fillers 1 added are adjusted so that the rate of ionic cross-linking (gelling) between sodium alginate molecules is not excessive for the dispersion force of the fillers 1 in the aqueous alginate solution. In this case, competition between the fillers 1 and sodium alginate as the binder 5 causes a gelling reaction of sodium alginate with a good timing while the fillers 1 are in contact with each other, so that a three-dimensional network structure having a high framework strength is formed.

To form the lamella structure of FIG. 2(b), a physical or chemical gradient is created in an aqueous calcium chloride solution into which an aqueous sodium alginate solution that is a dispersion of the fillers 1 is dropped. For example, while the aqueous calcium chloride solution is caused to flow in a predetermined direction, the aqueous sodium alginate solution that is a dispersion of the fillers 1 is dropped into the aqueous calcium chloride solution. In this case, the fillers 1 and the sodium alginate compete against each other and the sodium alginate is gelled while shearing force is exerted on the fillers 1 and the sodium alginate, and therefore, a lamella structure is formed in which the fillers 1 are aligned in the flowing direction. Alternatively, the aqueous sodium alginate solution that is a dispersion of the fillers 1 is dropped into the aqueous calcium chloride solution in which a concentration gradient or temperature gradient is created. In this case, the gelling reaction of the sodium alginate as the binder 5 proceeds along the concentration gradient or temperature gradient, and therefore, a lamella structure is formed in which the fillers 1 are aligned along the concentration gradient or temperature gradient.

<Porous Structure of Artificial Soil Particle>

The artificial soil particle 10 having the self-organized structure is a porous particle in which a communication hole 3 is formed between the fillers 1 having a small hole 2. The particle size of the artificial soil particle 10 (the average value of the size z of the artificial soil particle 10 in FIG. 1) is 0.2 to 10 mm, preferably 0.5 to 5 mm, and more preferably 1 to 5 mm. When the particle size of the artificial soil particle 10 is less than 0.2 mm, the interstice between each artificial soil particle 10 is small, so that the drainage performance decreases, and therefore, it is likely to be difficult for a plant to be grown to absorb oxygen through its roots. On the other hand, when the particle size of the artificial soil particle 10 exceeds 10 mm, the interstice between each artificial soil particle 10 is large, and therefore, the drainage performance is excessively high, so that it is difficult for a plant to absorb water, or a plant is likely to fall down because the artificial soil particles 10 are sparse. The particle size of the artificial soil particle 10 can, for example, be adjusted by classification using a sieve. The size of the communication hole 3 (the average value of the distance y between adjacent fillers 1 of FIG. 1) ranges from the submicrometer to the submillimeter scale, although it may vary depending on the type, composition, and granulation condition of the filler 1 or the binder. When the filler 1 is the zeolite 1a of FIG. 1(a) or the hydrotalcite 1b of FIG. 1(b), and a polymeric gelling agent is used, the size of the communication hole 3 is 0.1 to 20 $\mu$m. The size of the communication hole 3 may be measured using an optimum technique that is selected from gas adsorption, mercury intrusion, small-angle X-ray scattering, image processing, etc., and a combination thereof, depending on the state of an object to be measured. The particle size of the artificial soil particle 10 may, for example, be measured by optical microscopic observation and image processing. In this embodiment, the size of the communication hole 3 and the particle size of the artificial soil particle 10 are determined by the following measurement technique. Initially, the artificial soil particle to be measured is observed along with a ruler using a microscope. The microscopic image is obtained using an image processing software system (a two-dimensional image analysis software system "WinROOF," produced by MITANI CORPORATION). One hundred artificial soil particles are selected from the image, and the outlines of the communication holes or the artificial soil particles are traced. Based on the perimeter of the traced shape, the diameter of a circle corresponding to the perimeter of the traced shape is calculated. The average of the diameters of such circles (number: 100) obtained from the communication holes or artificial soil particles is referred to as the average size (unit: pixel).

Thereafter, the average size is converted into a unit length (μm to mm scale) by comparing it with the ruler in the image, thereby calculating the size of the communication hole or the particle size of the artificial soil particle.

In the artificial soil particle 10, the small holes 2 are distributed and arranged around the communication hole 3 so that the communication hole 3 can take in water and nutrients from the outside and the small holes 2 can receive the nutrients from the communication hole 3.

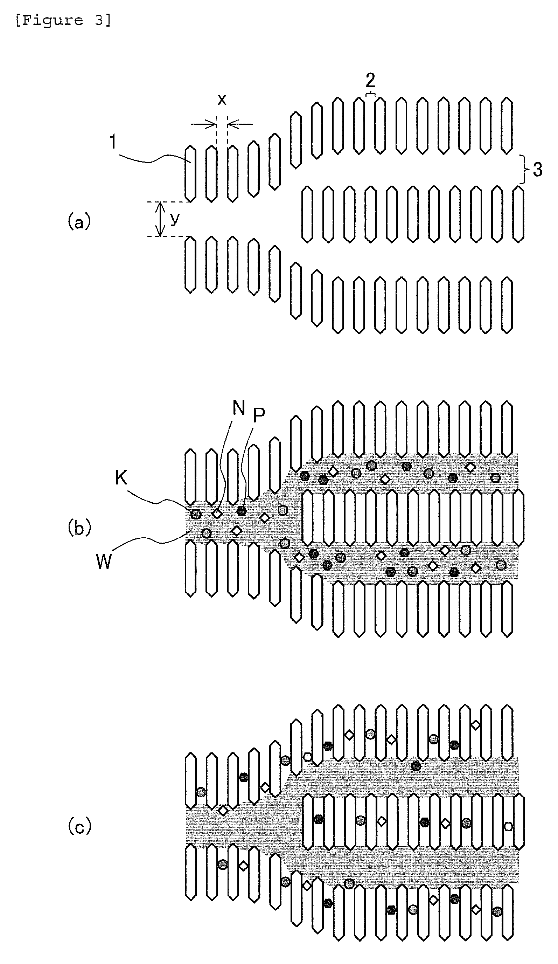

FIG. 3 is a model diagram schematically showing a positional relationship between the small holes 2 and the communication hole 3 in the artificial soil particle 10. Note that FIG. 3 shows a model of the internal structure of the artificial soil particle 10 of FIGS. 1 and 2, which may not be exactly the same as the actual internal structure of the artificial soil particle 10. In the artificial soil particle 10 of the present invention, the distributed arrangement of the small holes 2 around the communication hole 3 means that the small holes 2 are connected to the communication hole 3, and the small holes 2 connected to the communication hole 3 are distributed substantially all around the communication hole 3. For example, as shown in FIG. 3(a), a large number of the small holes 2 having the size x are connected to the communication hole 3 having the size y, and the small holes 2 are distributed along all the length of the communication hole 3. This particular positional relationship may be established for about half or more of the small holes 2 and about half or more of the communication holes 3. Although, in FIG. 3(a), because of space limitations, the particular positional relationship between the small holes 2 and the communication hole 3 is shown in a two-dimensional representation, the particular positional relationship is established in a three-dimensional space in the actual artificial soil particle 10. To date, conditions for establishing the particular positional relationship between the small holes 2 and the communication hole 3 have not yet been fully clarified. However, the particular positional relationship is considered to be a kind of self-organized structure formed in the artificial soil particle 10. The self-organized structure may, for example, be formed by adopting a material having high crystallinity as the filler 1, adopting a material having a particular crystal structure as the filler 1, employing a particular combination of materials as the filler 1, controlling the crystal structure or layered structure of the filler 1, performing a process of aligning the fillers 1, adding a particular additive during the granulation of the fillers 1, or optimizing the technique of granulating the fillers 1 (conditions for the granulation). As a result, it is considered that self-organization can be caused to emerge more reliably.

<Mechanisms for Water Retentivity and Fertilizer Retentivity of Artificial Soil Particle>

The artificial soil particle 10 of the present invention includes the small hole 2 and the communication hole 3 that have different sizes, and therefore, can be used to provide a multi-functional artificial soil that has well-balanced basic soil functions (water retentivity and fertilizer retentivity). Here, mechanisms for the water retentivity and fertilizer retentivity of the artificial soil particle 10 will be described in detail with reference to FIG. 3. FIG. 3 shows how water W and nutrients K, N, and P are taken into the artificial soil particle 10 from the outside, in a stepwise manner, i.e., in order of (a), (b), and (c). Here, the nutrient K represents potassium, the nutrient N represents nitrogen, and the nutrient P represents phosphorus.

As shown in FIG. 3(a), when the water W and the nutrients K, N, and P have not yet been taken into the artificial soil particle 10 from the outside, the communication hole 3 and the small holes 2 connected to the communication hole 3, of the artificial soil particle 10, are empty. As shown in FIG. 3(b), when the artificial soil particle 10 is in contact with the water W containing the nutrients K, N, and P, the water W and the nutrients K, N, and P are first taken into the communication hole 3. As shown in FIG. 3(c), when the communication hole 3 has been sufficiently wet, the nutrients K, N, and P of the water W and the nutrients K, N, and P taken into the communication hole 3 move from the communication hole 3 to the small holes 2. In the artificial soil particle 10 of the present invention, the nutrients K, N, and P are mainly taken into the small holes 2 while the water W is held by the communication hole 3. As a result, the small hole 2 mainly provides fertilizer retentivity while the communication hole 3 mainly provides water retentivity. Thus, the small hole 2 and the communication hole 3 are assigned different functions, and therefore, the artificial soil particle 10 can serve as a functional particle having water retentivity and fertilizer retentivity that are well balanced. When the artificial soil particle 10 is used in an artificial soil, the water W and the nutrients K, N, and P can be suitably supplied to a plant to be grown, and therefore, the artificial soil is easy to maintain and handle.

<Physical Properties of Artificial Soil Particle>

The small holes 2 and the communication holes 3 of the artificial soil particle 10 are preferably configured so that the total volume of the communication holes 3 is greater than the total volume of the small holes 2. This is because such a configuration allows the communication hole 3 to have sufficient water retentivity and also allows for smooth movement of nutrients from the communication hole 3 to the small holes 2. Also, if the total volume of the communication holes 3 is greater than the total volume of the small holes 2, the artificial soil particle 10 has light weight and low bulk density, and therefore, provides an easy-to-handle artificial soil. In order to cause the total volume of the communication holes 3 to be greater than the total volume of the small holes 2, it is effective to provide a three-dimensional network shown in FIG. 2(a). The artificial soil particle 10 having a three-dimensional network has low bulk density and light weight, but has stable structure, and therefore, can be preferably used as an artificial soil that has sufficient strength to grow root vegetables. A large number of voids provided in the artificial soil particle 10 provide good basic soil functions, such as water retentivity, fertilizer retentivity, drainage performance, air permeability, etc. Thus, an artificial soil having a high added value can be provided.

The strength of the artificial soil particle 10 may be evaluated using a volume change rate that is measured when repeated compression loads are applied. The artificial soil particle 10 of the present invention is designed so that the volume change rate after repeated compression loads of 25 KPa are applied is 20% or less. The volume change rate is preferably 15% or less. When the volume change rate exceeds 20%, the artificial soil particle 10 is easily destroyed when the artificial soil is put into a planter, etc., or a plant is transplanted, so that the structure of the artificial soil particle 10 (in the structure, the small holes 2 of the fillers 1 are distributed and arranged around the communication hole 3 between the fillers 1, and the fillers 1 are joined together into a three-dimensional network) is likely to be destroyed. As a result, the balance between water retentivity and fertilizer retentivity is lost. Also, when the structure of the artificial soil particle 10 is destroyed, the artificial soil is likely to be compacted and solidified, which may have an adverse influence on growing of root vegetables.

While the artificial soil particle 10 of the present invention is suitable for growing of root vegetables, the water retentivity, which is good for artificial soil, allows for growing of leaf vegetables that have so far been mostly hydroponically grown. Here, the water retentivity of artificial soil may be evaluated based on the amount of water retained during passage of water. The amount of water retained during passage of water is calculated as the amount of water retained per 100 mL of the artificial soil particles, which is given in units of percent (%). In the artificial soil particle 10 of the present invention, the small holes 2 of the fillers 1 are distributed and arranged around the communication hole 3 between the fillers 1, and the fillers 1 are joined together into a three-dimensional network, i.e., a particular configuration, whereby the amount of water retained during passage of water can be set to 20 to 70%. When the amount of water retained during passage of water is less than 20%, it is difficult to retain sufficient water for growing a plant. When the amount of water retained during passage of water exceeds 70%, the air permeability of artificial soil deteriorates, likely leading to an adverse influence on the growth of a plant. Air permeability can be represented by the gas phase rate of artificial soil in a dry state. The gas phase rate of an artificial soil employing the artificial soil particle 10 of the present invention can be set to 20 to 80%, preferably 40 to 80%, and more preferably 50 to 80%. When the gas phase rate is less than 20%, the amount of air supplied to the roots of a plant is likely to be insufficient. When the gas phase rate exceeds 80%, the water retentivity is likely to be insufficient.

The artificial soil particle 10 may be designed so that the water retentivity of the communication hole 3 is increased. An example technique of improving the water retentivity of the communication hole 3 is to introduce a water retention material into the communication hole 3 of the artificial soil particle 10. The water retention material may, for example, be introduced into the communication hole 3 by filling the communication hole 3 with the water retention material or coating a surface of the communication hole 3 with a film of the water retention material. In this case, the water retention material may be provided to at least a portion of the communication hole 3. The water retention material may, for example, be introduced by impregnating the artificial soil particle 10 with a polymer solution that is formulated by dissolving a polymeric material having water retentivity in a solvent.

Examples of a polymeric material that can be used as the water retention material include synthetic polymer water retention materials, such as polyacrylate polymers, polysulfonate polymers, polyacrylamide polymers, polyvinyl alcohol polymers, polyalkylene oxide polymers, etc., and natural polymer water retention materials, such as polyaspartate polymers, polyglutamate polymers, polyalginate polymers, cellulose polymers, starch, etc. These water retention materials may be used in combination.

As the solvent for dissolving the polymeric material that is used as the water retention material, selected is one that can well dissolve the polymeric material that is used. In other words, suitably selected is a combination of a polymeric material and a solvent that have their solubility parameter values (SP values) close to each other. For example, a combination of a polymeric material and a solvent whose SP values have a difference of 5 or less (e.g., a combination of nitro cellulose, having an SP value of about 10, and methanol, having an SP value of about 14.5) is selected. Examples of such a solvent include methanol, ethanol, isopropanol, butanol, ethyl acetate, acetone, methyl ethyl ketone, and methyl isobutyl ketone. These solvents may be used in combination.

Another technique of improving the water retentivity of the communication hole 3 is to use a water retention filler as all or a portion of the filler 1 that is a material used in formulation of the artificial soil particle 10. In this case, the produced artificial soil particle 10 itself has water retentivity, and therefore, a particular post-treatment for improving water retentivity is not required. As the water retention filler, a hydrophilic filler or a porous grain may be employed. Examples of the hydrophilic filler include zeolite, smectite minerals, mica minerals, talc, silica, double hydroxides, etc. Examples of the porous grain include foam glass, porous metals, porous ceramics, polymer porous materials, hydrophilic fibers, etc.

<Artificial Soil Aggregate>

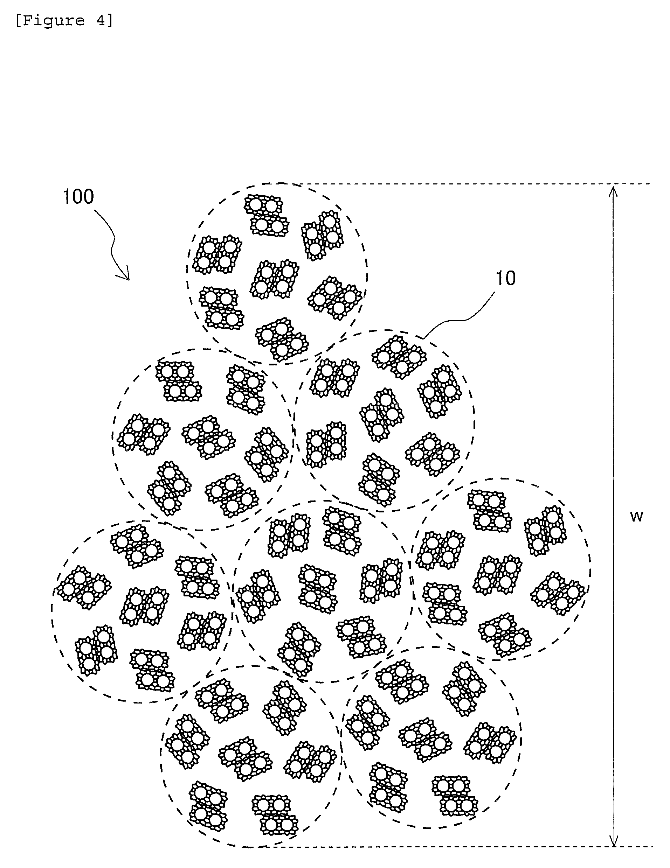

The artificial soil particles 10 of the present invention may be aggregated into an artificial soil aggregate that can be used as an artificial soil. FIG. 4 is a schematic diagram of an artificial soil aggregate 100. Here, the artificial soil aggregate 100 illustrated is an aggregate of the artificial soil particles 10 employing the zeolite 1a of FIG. 1(a).

The artificial soil aggregate 100 has a cluster structure in which a plurality of the artificial soil particles 10 are linked together. The cluster structure is obtained by bonding the artificial soil particles 10 together using a second binder. The second binder used in the aggregation may be the same as the binder (first binder) that is used in the formation of the artificial soil particle 10, or may be a different binder. The size of the artificial soil aggregate 100 (the average value of a size w of the artificial soil aggregate 100 of FIG. 4) is 0.4 to 20 mm, preferably 0.5 to 18 mm, and more preferably 1 to 15 mm. When the size of the artificial soil aggregate 100 is less than 0.4 mm, an interstice between each artificial soil particle 10 included in the artificial soil aggregate 100 is small, so that the drainage performance decreases, and therefore, it is likely to be difficult for a plant to be grown to absorb oxygen through its roots. On the other hand, when the size of the artificial soil aggregate 100 exceeds 20 mm, the drainage performance is excessively high, so that it is difficult for a plant to absorb water, or a plant is likely to fall down because the artificial soil aggregate 100 is sparse. The size of the artificial soil aggregate 100 is, for example, measured by optical microscopic observation and image processing. In this embodiment, as with the size of the communication hole 3 and the particle size of the artificial soil particle 10, the size of the artificial soil aggregate 100 was measured by the above measurement technique using image processing.

The artificial soil aggregate 100 that is obtained by aggregating the artificial soil particles 10 of the present invention has water retentivity and fertilizer retentivity that are well balanced, and therefore, can suitably supply water and nutrients to a plant to be grown. Therefore, the artificial soil aggregate 100 of the present invention is useful as an artificial soil that is easy to maintain and handle.

Examples

Example artificial soil particles having a self-organized structure according to the present invention will now be described. As an example, the gelling reaction between an aqueous sodium alginate solution and an aqueous calcium chloride solution was utilized to formulate an artificial soil particle having a self-organized structure that is formed by competition between fillers and sodium alginate. In addition, an aggregation of each example artificial soil particle was formed as an artificial soil aggregate. Characteristics of the artificial soil particles and artificial soil aggregates were evaluated using techniques described in (1) to (7) below.

(1) Particle Size

Artificial soil particles or artificial soil aggregates were previously classified according to predetermined particle sizes using sieves, and the particle sizes of the classified particles or aggregates were measured by the measurement technique using image processing described in the above embodiment. The classified particles or aggregates were used as samples.

(2) Hole Diameter

The hole diameter of the small hole of the filler included in the artificial soil particle was measured using the gas adsorption technique. The hole diameter of the communication hole between the fillers was measured by the measurement technique using image processing described in the above embodiment.

(3) Cation Exchange Capacity

An extraction liquid of the artificial soil particle was prepared using the general extraction and filter unit "CEC-10 Ver. 2," manufactured by Fujihira Industry Co., Ltd., and was used as a sample for measurement of cation exchange capacity. The cation exchange capacity (CEC) of the artificial soil particle was measured using the soil plant general analyzer "SFP-3," manufactured by Fujihira Industry Co., Ltd.

(4) Anion Exchange Capacity

Twenty milliliters of 0.05 M calcium nitrate solution was added to 2 g of the artificial soil particles, followed by stirring for 1 h. The solution was centrifuged (10,000 rpm) for 1 min at room temperature, and the supernatant was used as a measurement sample. For the measurement sample, the absorbance at a wavelength of 410 nm was measured using an ultraviolet and visible spectrophotometer to obtain the calcium nitrate concentration. The amount of nitrate nitrogen absorbed per unit weight was calculated based on the difference between the obtained calcium nitrate concentration and the calcium nitrate concentration of a blank, and was converted into an anion exchange capacity (AEC) per unit volume using the specific gravity.

(5) Strength

The strength of the artificial soil particle was evaluated based on a volume change rate that is obtained when repeated compression loads are applied. The volume change rate was measured by the following technique. One hundred milliliters of the artificial soil as a sample was loaded in a sample cylinder (inner diameter: about 5 cm, height: about 5 cm, and volume: 100 mL) for evaluation of the soil, and a cylindrical weight (weight: 5 kg) having a diameter slightly smaller than that of the sample cylinder was gently placed on the sample. The sample was allowed to stand for 60 sec before the weight was removed. These operations were repeated 10 times (repeated compression loads: 25 KPa). After the application of the repeated compression loads was completed, the sample was allowed to stand for 60 sec. The volume V of the sample was measured using a graduated cylinder, etc., and the volume change rate ΔV was calculated by:

$$\Delta V \ (\%) \ = \ (100 \ - \ V)/100 \ \times \ 100 \qquad\qquad [1]$$

(6) Amount of Retained Water

One hundred milliliters of the artificial soil particles was packed into an empty chromatography column. The amount of water retained in the artificial soil as 200 mL of water was gently poured into the column from the top, is referred to as the "amount of water retained during passage of water."

(7) Gas Phase Rate

An artificial soil including the artificial soil particles was immersed in tap water for 24 h to prepare a water-saturated sample. The sample was allowed to stand for 1 h. After water that falls down due to its weight was allowed to flow out from the sample, the sample was extracted and placed into a 100-mL sample cylinder while the shape of the sample was maintained unchanged to the extent possible. The sample cylinder was set in a digital actual volumenometer "DIK-1150," manufactured by Daiki Rika Kogyo Co., Ltd., to measure the gas phase rate.

[Artificial Soil Particle]

To 100 parts by weight of a 0.5% aqueous sodium alginate solution, 10 parts by weight of an artificial zeolite "Ryukyu-lite 600," manufactured by ECOWEL Inc., and 10 parts by weight of a reagent, hydrotalcite, manufactured by Wako Pure Chemical Industries, Ltd., were added, followed by mixing. The mixture solution was dropped into a 5% aqueous calcium chloride solution at a rate of 1 drop/sec. After the drops were gelled into particles, the gel particles were collected and washed with water, followed by drying using a drying machine at 55°C for 24 h. The dried gel particles were classified by sieving, thereby obtaining a artificial soil particle having a size between 2 mm and 4 mm. The obtained artificial soil particle had a three-dimensional network structure. This artificial soil particle had a cation exchange capacity of 14 meq/100 cc and an anion exchange capacity of 15 meq/100 cc. An artificial soil employing the artificial soil particles had a strength (volume change rate) of 13%, an amount of retained water (the amount of water retained during passage of water) of 26%, and a gas phase rate of 33%.

[Artificial Soil Aggregate]

One hundred parts by weight of the artificial soil particle 100 having a three-dimensional network structure, and five parts by weight of a vinyl acetate resin adhesive "BONDO (registered trademark) for wood," manufactured by Konishi Co., Ltd., as the second binder, were mixed. The mixture was introduced into a granulation machine to form an aggregate. As a result, an artificial soil aggregate was obtained. The artificial soil aggregate thus obtained had a particle size of 3 to 18 mm, and a cluster structure in which a plurality of artificial soil particles are linked together.

INDUSTRIAL APPLICABILITY

The artificial soil particle of the present invention and a method for producing the artificial soil particle are applicable to an artificial soil for use in a plant factory, etc., and other applications, such as indoor horticultural soils, greening soils, molded soils, soil conditioners, soils for interior decoration, etc.

REFERENCE SIGNS LIST

| 1 | FILLER |
|---|---|
| 2 | SMALL HOLE |
| 3 | COMMUNICATION HOLE (INTERSTICE) |
| 5 | BINDER |
| 10 | ARTIFICIAL SOIL PARTICLE |
| 100 | ARTIFICIAL SOIL AGGREGATE |

**Claims**

1.  An artificial soil particle including a plurality of fillers having a small hole, the fillers bonding with each other through a binder, **characterized in that**
    the artificial soil particle has a self-organized structure formed by competition between the fillers and the binder.

2.  The artificial soil particle of claim 1, **characterized in that**
    the self-organized structure is a three-dimensional network structure in which the plurality of fillers bond with each other in a three-dimensional fashion.

3.  The artificial soil particle of claim 1, **characterized in that**
    the self-organized structure is a lamella structure in which the plurality of fillers are aligned in a predetermined direction.

4.  The artificial soil particle of any one of claims 1 to 3, **characterized in that**
    a communication hole is formed between the fillers.

5.  The artificial soil particle of claim 4, **characterized in that**
    the small hole has a size ranging from the subnanometer to the submicrometer scale, and the communication hole has a size ranging from the submicrometer to the submillimeter scale.

6.  The artificial soil particle of any one of claims 1 to 5, **characterized in that**
    the small hole has ion exchange capability.

7.  The artificial soil particle of any one of claims 1 to 6, **characterized in that**
    the artificial soil particle has an average particle size of 0.2 to 10 mm.

8.  A method for producing an artificial soil particle including a plurality of fillers having a small hole, the fillers bonding with each other through a binder, **characterized in that** the method comprises:

    causing the fillers to perform self-organization by competition between the fillers and the binder.

[Figure 1]

(a)

(b)

[Figure 2]

(a)

(b)

[Figure 3]

(a)

(b)

(c)

[Figure 4]

## INTERNATIONAL SEARCH REPORT

| International application No. |
|---|
| PCT/JP2014/060508 |

**A. CLASSIFICATION OF SUBJECT MATTER**
*A01G1/00*(2006.01)i

According to International Patent Classification (IPC) or to both national classification and IPC

**B. FIELDS SEARCHED**

Minimum documentation searched (classification system followed by classification symbols)
A01G1/00

Documentation searched other than minimum documentation to the extent that such documents are included in the fields searched
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2011-57461 A (Shinto Co., Ltd.),<br>24 March 2011 (24.03.2011),<br>paragraphs [0003], [0019] to [0035]<br>(Family: none) | 1-5,7,8<br>6 |
| Y | JP 2773817 B2 (Okutama Kogyo Co., Ltd.),<br>09 July 1998 (09.07.1998),<br>paragraph [0007]<br>(Family: none) | 6 |
| A | JP 2002-335747 A (Tetra Co., Ltd.),<br>26 November 2002 (26.11.2002),<br>paragraphs [0024] to [0036]; fig. 2 to 3<br>(Family: none) | 1-8 |

☒ Further documents are listed in the continuation of Box C. ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 July, 2014 (07.07.14) | 15 July, 2014 (15.07.14) |

| Name and mailing address of the ISA/<br>Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2014/060508

C (Continuation).   DOCUMENTS CONSIDERED TO BE RELEVANT

| Category* | Citation of document, with indication, where appropriate, of the relevant passages | Relevant to claim No. |
|---|---|---|
| A | JP 6-209662 A  (Iwaki Glass Co., Ltd.), 02 August 1994 (02.08.1994), paragraphs [0011] to [0025] (Family: none) | 1-8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2000336356 A